# EUROPEAN PATENT SPECIFICATION

(11) **EP 2 839 335 B1**
(45) Date of publication and mention of the grant of the patent: **03.04.2019**
(21) Application number: 13714555.3
(22) Date of filing: 03.04.2013
(51) Int. Cl.: G02F 1/1335, G02F 1/1347

(54) **ELECTRO-OPTICAL SWITCHING ELEMENT AND ELECTRO-OPTICAL DISPLAY**
ELEKTRO-OPTISCHES SCHALTELEMENT UND ELEKTRO-OPTISCHE ANZEIGE
ÉLÉMENT DE COMMUTATION ÉLECTRO-OPTIQUE ET AFFICHEUR ÉLECTRO-OPTIQUE

(30) Priority: 20.04.2012 EP 12002799
(43) Date of publication of application: 25.02.2015
(73) Proprietor: Merck Patent GmbH, 64293 Darmstadt (DE)
(72) Inventor: SUZUKI, Masayoshi, Tokyo 151-0062 (JP); FUJIWARA, Naoya, Yokohama 225-0002 (JP)
(86) International application number: PCT/EP2013/000987
(87) International publication number: WO 2013/156112

(56) References cited:
- WO-A1-2011/107215
- WO-A2-2006/058267
- JP-A- 2005 003 823
- US-A1- 2010 102 340

## Description

### Field of the Invention

The present invention relates to electro-optical switching elements and their use in electro-optical displays, as well as to these displays. In particular, the present invention relates to electro-optical switching elements leading to bright images with excellent visibilities under bright ambient light conditions and hence with low power consumption and additionally featuring long term reliabilities. These electro-optical switching elements comprise at least a light reflecting layer, a light switching layer and a light conversion layer, which comprises one or more light emitting moieties. The electro-optical switching elements according to the present application are particularly well suited for so called liquid crystal, electronic paper (e-paper) and MEMS switching applications.

### State of the Arts and Problems to Be Solved

Electro-optical switching elements using a liquid crystal material with a helical structure, optionally comprising a fluorescent dye, as lighting and/or reflecting material with improved contrast by avoiding the otherwise typical strong selective reflection of ambient light by the liquid crystal helical structure, are described in laid open Japanese patent application JP 2008-233915 (A).

Electro-optical switching elements using a liquid crystal material with a helical structure, optionally comprising a fluorescent dye, as a light conversion means capable to convert light (e.g. ambient light and/or light from a backlight system), each of said light conversion means
∘ being capable to convert the state of polarization of the light from non-polarized light either to linear polarized light or to circular polarized light and, at the same time,
∘ optionally being capable to shift the wavelength of the light to longer values are described in laid open international patent application WO2010/028728A.

Electro-optical switching elements comprising one or more layers of cholesteric liquid crystal, optionally comprising a fluorescent dye, as a light conversion means capable to convert light (e.g. ambient light and/or light from a backlight system), each of said light conversion means
∘ being capable to convert the state of polarization of the light from non- polarized light either to linear polarized light or to circular polarized light and, at the same time,
∘ optionally being capable to shift the wavelength of the light to longer values are described in laid open international patent application WO2011/107215A.

However, no actual display device that gives high luminance, clear visibility under bright ambient light conditions, low power consumption and a wide process window simultaneously, has been realized through a disclosure of aforementioned prior arts.

### Present Invention

The inventor has analyzed energetically the cause of aforementioned problems and found the fact. Surprisingly, in most cases, light emitting moieties, such as laser dyes, do not have enough compatibility with liquid crystal materials even a liquid material is utilized.

It causes above mentioned problems through bad uniformity of light emitting moieties and liquid crystal materials.

It also causes difficulty of achieving efficient light emitting moieties.

Based on the aforementioned knowledge, the inventor has made effort to solve the problems, and finally found the innovative structure mentioned below. The present invention is defined by the appended claims.

The electro-optical display according to the present application comprises a means for illumination, such as a backlight.

The electro-optical display according to the present application comprises one light direction changing layer, namely a micro lens array, between the light reflection layer and the electro optical element and, optionally, another one on the opposite side of the light converting layer. Said light reflection means is capable to selectively reflect light of particular wavelength region.

The electro-optical display comprises in each pixel one electro-optical switching element. Particularly preferred, the displays are suitable for the display of information, such as "Liquid crystal displays", "electronic paper" and "MEMS" switching displays. And most preferred displays, are Liquid crystal displays.

In a preferred embodiment of the present invention, the electro-optical devices according to the present invention have a unique combination and arrangement of optical elements so that they utilize reflected ambient light as well as the light from a backlight and hence, they lead to a bright image with clear visibility under bright ambient light conditions with low power consumption.

According to a preferred embodiment of the present invention, an electro-optical display comprises the features of independent claim 1.

In the electro-optical devices according to the present invention, one or more optical elements are arranged in such a way that they utilize the light from the backlight system quite efficiently, and further that the radiation from the backlight system does not include radiation having a high energy. Preferably, it does not include any UV radiation, and more preferably also no blue light with short wavelengths. Preferably, the wavelength of the light is 385 nm or more, more preferably 420 nm or more, and most preferably 430 nm or more.

The light reflection means used according to the present application may have different forms. In a preferred embodiment, they comprise one or more layers, which are more or less flat, essentially continuous layers, preferably covering essentially all switching elements of the display. The reflection means are structured, e.g. in a patterned way, such as e.g. being congruent with the pixels of the display.

In particular, when the light reflecting layer is a cholesteric liquid crystal layer, it is desirable to disturb the cholesteric liquid crystals, it is desirable to disturb the cholesteric liquid crystal layer morphology by intentionally tilting the helical axes as described in Japanese patent application JP05-3823 from the viewing angle point of view.

The expression of the electro-optical element being capable of controlling the intensity of light means that the state of transmission through the electro-optical element may be altered at least from one state to at least one other state by application of an external force, preferably by electrically addressing it. The change of the transmission may be, and preferably is, more or less continuous, in order to facilitate the representation of grey scales.

It is, however, also possible to use electro-optical elements using effects, which exhibit bistability. The latter case is often beneficially used in devices for applications, which require economising of the energy used, like e.g. bistable liquid crystal cell.

The light converting layer in the electro-optical display according to the present invention, increases the chromaticity range, improves the uniformity of the distribution of the light from the backlight, and suppresses transmission of light having a short wavelength.

The light converting layer used in the electro-optical display according to the present invention may have e.g. the form a single layer, which includes a few kinds of organic dyes and/or inorganic phosphors, or have the form of stacked layers including different dyes and/or inorganic phosphors in each layer. They further are spatially structured congruent with the pixels, i.e. respectively patterned.

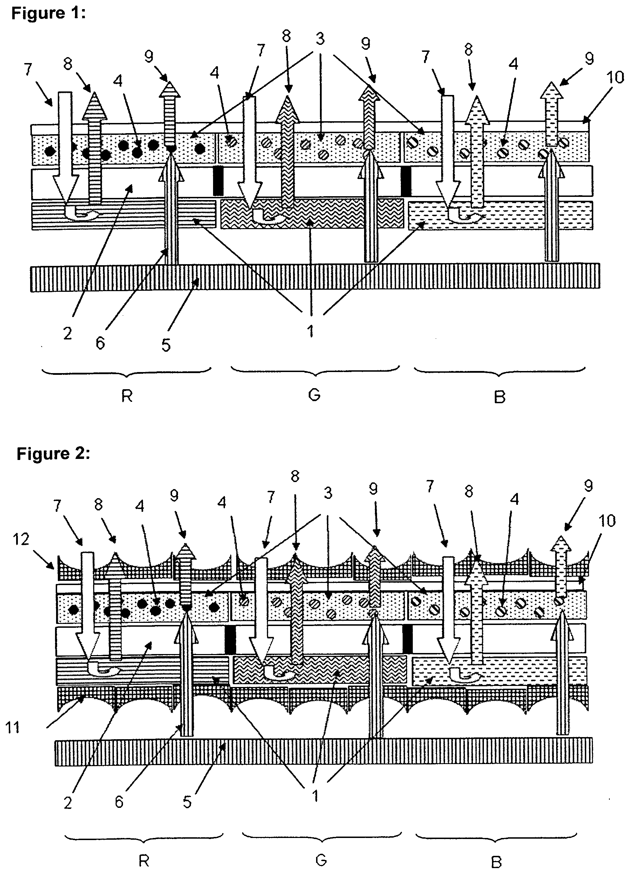

In Figure 1 the device is shown for the first example helpful to understand the invention. A back light (5), a light reflecting layer (1), a light switching layer (2) as the electro-optical element, and a light converting layer (3) are arranged in this sequence along direction of a light form the backlight (5).

Any layer can be the light reflecting layer (1) as long as exciting light (6) can pass through the layer and ambient light (7) can be reflected by the layer, for examples, half mirror, BEF, dielectric mirror and cholesteric liquid crystal layer.
Dielectric mirror and cholesteric liquid crystal layer are both preferable, because they can select the reflecting light wavelength and can pass the light exiting light thoroughly.
From the practical process point of view, the cholesteric liquid crystal layer is more preferable as the light reflecting layer (2).
The layer of cholesteric liquid crystal, as the light reflecting layer (2), has a selective reflection in the range of visible light. This layer of cholesteric liquid crystal is preferably located between the lower substrate and the respective electrode of this substrate. To realise a colour display, e.g. three of these switching elements may be conveniently used, each one having a different cholesteric liquid crystal, exhibiting a different wavelength of selective reflection. Preferably, one each of these different cholesteric liquid crystals has a region of wavelengths of selective reflection in a spectral region corresponding to one each of the three primary colours red (R), green (G) and blue (B), respectively.

In the case a cholesteric liquid crystal is used in the liquid crystal layer as the light reflecting layer (2), the cholesteric liquid crystal in the liquid crystal layer as the light reflecting layer (2) has only one twist sense, since the device utilises only polarized light.
On the other hand, if electrophoresis display or MEMS switching device is used as the light switching layer (2), the cholesteric liquid crystal layers as the light reflecting layer (2) may have two twist senses.

The light produced by the selective reflection from the cholesteric liquid crystals is characterised by a rather narrow angular distribution, leading to a rather strong angular dependence of the brightness of the light reflected. It may, however, be reduced by an intentional distribution of the orientation of the axis of the layer of the cholesteric liquid crystals. This leads to an increased field of view as shown in Japanese laid open patent application JP 2005-003823 (A).

Any device can be used as the light switching layer as long as it can control the amount of light.
For example, liquid crystal device, electrophoretic device and MEMS switching device can be used.

The light switching layer may be beneficially addressed by an active matrix driving system e.g. using thin film transistors (TFTs), like in the case of a conventional liquid crystal display. The light switching layer may, however, also be either directly addressed or by a passive matrix driving system, e.g. in the so called "time multiplex" addressing. In the case of liquid crystal device is used as the light switching layer, these two latter cases of addressing do not require a matrix of active driving elements (e.g. TFTs). In an active matrix driving system, typically, and preferably, liquid crystal cells are used in which the director of the liquid crystal is twisted by an angle with an absolute value of 90° or of about 90° through the cell from the bottom substrate to the top substrate ("TN" configuration). In contrast, in displays using a passive matrix driving system, the director of the liquid crystal is twisted by an angle with an absolute value in the range of 180° to 270°, preferably in the range of 240° to or 270° ("STN" configuration).

The light conversion layer (3) is a layer containing light luminescent substances (4), such as phosphors and/ or fluorescent dyes, which absorb the exciting light (6) and convert it into a longer wavelength light as an emitted light (9).
Any material can be used as a medium for the light conversion layer (3) as long as a light emitting material can be dispersed in common plastic materials, for example, epoxy resin acrylate resin, novolak resin, siloxane and / or polystyrene can be used.

To realise a colour display, e.g. three of these switching elements may be conveniently used, each one having light conversion layer exhibiting a different wavelength of selective wavelength conversion. Preferably, one each of these different light conversion layers has a region of wavelengths of selective wavelength conversion in a spectral region corresponding to one each of the three primary colours red (R), green (G) and blue (B), respectively.
In Fig.1, three primary colours red (R), green (G) and blue (B) are depicted. The three colours are not always necessary depending on a display device. Such as, the three colours can be piled depending on a requirement for a display device.

Exciting light (106) passes through the light switching layer (2) when it is open and excites the light emission substances (4), and hence, a pixel glows.
The amount (intensity) of the emitted light (9) and the ambient light (7) are both controlled by the light switching layer.

As a material comprising one or more light emitting substances (4), every material, which absorbs the light of the excitation and also emits light may be used. Organic fluorescent dyes and/or inorganic phosphors can be used. When dyes with a small Stokes shift are used, ambient light can be used as the light for excitation. Brighter images may be obtained when an backlight (5) is used for excitation, which emits blue light having a wavelength of 470 nm and/or which emits light having wavelengths is shorter than 470 nm or, even more desirable, shorter than 400 nm. As backlight for the excitation (5) inorganic light emitting diodes (LEDs), organic light emitting diodes (OLEDs) or fluorescent lamps or lasers may be used.

As organic dyes, various kinds of fluorescent dyes and phosphorescent dyes may be beneficially used, such as laser dyes and/or light emissive dyes used in organic light emitting diodes. Respective laser dyes are commercially available from Exciton Corporation, USA via Indeco Corporation, Japan, whereas other suitable dyes are commercially available from American Dye Sources Inc., Canada.

Laser dyes with an emission wavelength in the blue spectral region, which may be used here, are e.g. commercially available from Exciton Corporation, USA via Indeco Corporation, Japan e.g. Coumarin460, Coumarin480, Coumarin481, Coumarin485, Coumarin487, Coumarin490, LD489, LD490, Coumarin500, Coumarin503, Coumarin504, Coumarin504T and Coumarin515. Besides these laser dyes, fluorescent dyes with an emission in the blue spectral region such as perylene, 9-amino-acridine, 12(9-anthroyloxy)stearic acid, 4-phenylspiro[furan-2(3H),1'-futalan] -3,3'-dione, N-(7-dimethylamino-4-methylcoumarynyl)-maleimide and/or the dyes ADS135BE, ADS040BE, ADS256FS, ADS086BE, ADS084BE, which are commercially available from American Dye Sources Inc., Canada, may be used too. These dyes may be used according to the present invention either individually or in the form of appropriate mixtures.

Laser dyes emitting in the green spectral region, which may be used here, are commercially available: e.g. Coumarin522, Coumarin 522B, Coumarin525 and Coumarin540A from Exciton Corporation, USA via Indeco Corporation, Japan and Coumarin 6, 8-hydroxy-xynoline* from Sigma-Aldrich^{Ltd.}, Japan, a subsidiary of Sigma-Aldrich, USA. Besides these laser dyes, fluorescent dyes with an emission in the green spectral region such as the dyes ADS061GE, ADS063GE, ADS108GE, ADS109GE and ADS128GE from American Dye Sources Inc., Canada, may be used too. Also these dyes may be used according to the present invention either individually or in the form of appropriate mixtures.

Laser dyes emitting in the red spectral region, which may be used here, are commercially available: e.g. DCM, Fluorol 555, Rhodamine 560 Perchlorate, Rhodamine 560 Chloride and LDS698 from Exciton Corporation, USA via Indeco Corporation, Japan. Further, fluorescent dyes with an emission in the red spectral region such as ADS055RE, ADS061RE, ADS068RE, ADS069RE and ADS076RE commercially available from American Dye Sources Inc., Canada, may be used. Also these dyes may be used according to the present invention either individually or in the form of appropriate mixtures.

Alternatively, as organic dyes, dyes emitting light developed for organic light emitting diodes (OLEDs) may also be used here. Dyes, as those described in Japanese patent JP 2795932 (B2), which are able to convert colours, may be used according to the present invention. The dyes described in a paper S. A. Swanson et al., Chem. Mater., Vol.15, (2003) pp.2305-2312 may also be used beneficially. Blue dyes, as well as green dyes, as well as red as described in Japanese patent applications JP 2004-263179 (A), JP 2006-269819 (A) and JP 2008-091282 (A) may also be used, in particular, for red dyes, green light emitting dyes, which convert UV radiation or blue light, may be used in combination with dyes emitting red light, which absorb green light and emit red light as described in laid open Japanese patent application JP 2003-264081 (A). These dyes most generally may be used as they are described by the respective references. However, it may be necessary to slightly modify their chemical structures by well known measures, for example by the introduction of alkyl chains or the modification of alkyl chains, to increase their solubility in organic solvents, and especially in liquid crystals.

As blue inorganic phosphors, Cu activated zinc sulfide phosphors as described in laid open Japanese patent application JP 2002-062530 (A) and/or Eu activated halo phosphate phosphors, Eu activated aluminate phosphors as described in laid open Japanese patent application JP 2006-299207 (A) may be used. For green inorganic phosphors, Ce or Tb activated rare earth element borate phosphors as described in laid open Japanese patent application JP 2006-299207 (A) may be used. For red emission, Eu activated lanthanum sulfide phosphors or Eu activated yttrium sulfide phosphors as described in laid open Japanese patent application JP 2006-299207 (A) may be used. Yellow phosphors, which consist of BaS and Cu²⁺ as a colour centre as described in laid open Japanese patent application JP2007-063365 (A), and red phosphors, which consist of Ba₂ZnS₃ and Mn²⁺ as a colour centre as described in laid open Japanese patent application JP 2007-063366 (A), can also be used. Ce activated garnet phosphors as described in Japanese patent JP 3503139 (B2) mentioned above, red phosphors as described in laid open Japanese patent application JP 2005-048105 (A), beta-sialon green phosphors as described in laid open Japanese patent application JP 2007-262417 (A), and Ca alfa-sialon red phosphors can also be used. The phosphors above mentioned can be used as ground material and/or as surface modified material dispersed in light conversion layers. Quantum dots as described in WO 2006/017125 may also be used.

The first embodiment of the present invention is shown in Fig.2, in which a light direction changing layer (11), respectively (12), that can make the light from backlight or ambient light into parallel light is set at least on the rear side of the light switching layer (2).

The light direction changing layer (12) can be placed anywhere outside of the light switching layer (2). It is preferable to place it at the top of the whole device for the observation direction. The light direction changing layer (11) is composed of a micro-lens array and it can solve the parallax problem even when pixel size is small and thick substrates are used for the light switching layer (2).

Concerning the form of the micro-lens array, it's pitch is desirable to be smaller that a pixel size, preferablly, the pitch is smaller than the half of the shorter side of a pixel so that it can avoid the complication of an alignment between the micro-lens arrays and the display pixels.

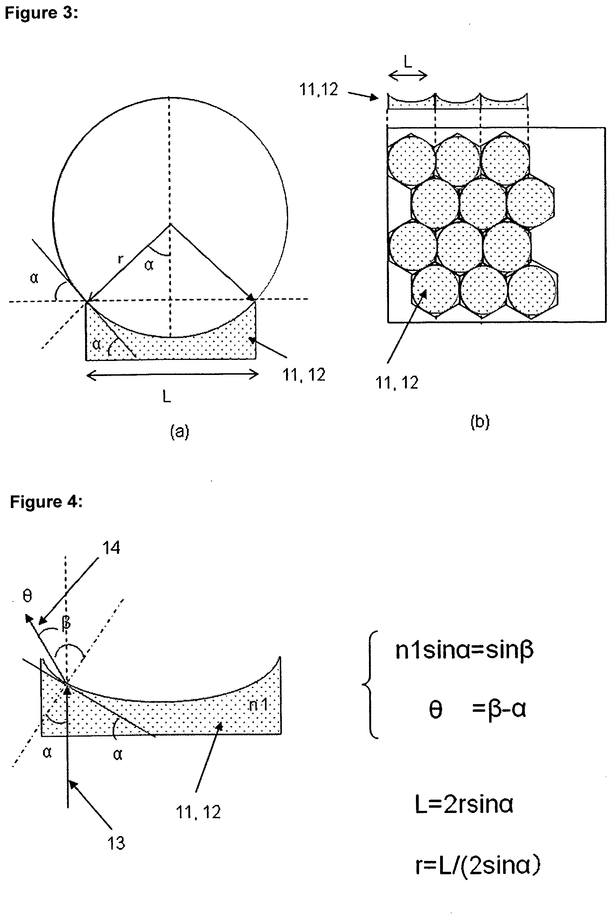

Fig. 3 shows the outline of the micro-lens array.
The micro-lends array has a surface shape that is a part of a sphere.
If a critical angle of the material is *α*, an edge of a micro-lens is the point where the circular cone angle is *α* as shown in Fig.3.
In the case of a radius of the sphere is r and a micro-lens pitch is L, r is equal to L / (2sin *α*).

In Fig. 3 and Fig. 4, material refractive index, n, is 1 and the neighbour layer is the air and its refractive index is assumed to be 1.45.
Parallel lights in the Fig. 3 and Fig. 4, go out (or come into) the micro-lens with an angle θ which is given by the equation θ= *β* - *α*, where *β* is an angle determined by Snell's law (Fig. 3).

Micro-lens array can be fabricated using a photo-lithography technique or nano-inprinting technique. Nano-inprinting technique is preferable from a mass production point of view.
In a photo-lithography technique, a resin is coated and after UV light exposure through a proper photo mask and resin development, a desirable shape is formed by etching.
On the other hand, in a nano-inprinting technique, a mold is fabricated using a photo-lithography technique, and in the nano-inprinting process, the resin consist of either a thermally polymerizing resin or a photo-polymerizable resin (or both) is replicated by the mold.

In other embodiments, disturbing the twist axes of the cholesteric liquid crystal layers on purpose is effective to enhance the field of view as described e.g. in Japanese laid open patent application JP 2005-003823 (A). However, in the present embodiment, it is highly desirable that the twist axes of all of the cholesteric liquid crystal layers should be aligned in one and the same direction. This type of orientation may be realized rather easily, for example, by the following process. An alignment layer is rubbed mechanically and/or treated photochemically and a layer of a cholesteric liquid crystal is coated on top of the alignment layer. Then, the layer of the cholesteric liquid crystal is heated to a temperature above its clearing point (i.e. the temperature of the transition to the isotropic phase) and then it is allowed to cool down gradually to ambient temperature.

A liquid crystal cell operating in the phase change mode can be used instead of a cell or film operating in the PDLC mode. The liquid crystal material, which is used in the cell operating in the phase change mode, may preferably be either a smectic material, preferably a material exhibiting a S_{A} phase, or a cholesteric material of appropriate pitch. Preferably, a cholesteric material is used. These liquid crystal cells are used in the scattering mode and, thus, do not require the use of polarizers. The used cholesteric liquid crystal preferably changes its state from its scattering focal conic orientation to its planar (or homeotropic) transparent state. These electro-optical modes are particularly useful, as they exhibit a memory effect.

Alternatively, a layer of a "broad-band" reflective cholesteric liquid crystal, i.e. of a cholesteric liquid crystal showing a "selective" reflection having a broad range of wavelengths, may be applied. Such a broad-band reflective cholesteric liquid crystal may be realized by preparing a cholesteric layer having a cholesteric pitch, which gradually changes e.g. as a function of the location throughout the thickness of the layer. The preparation of such a layer may be simple and straightforward.

The addition of a second layer of a broad-band cholesteric liquid crystal, having the opposite twist sense of twist compared to that of the first layer of broad-band a broad-band cholesteric liquid crystal, results in the realization of the brightest images.

Besides natural ambient light, and if the light that excites the light emitting substance is irradiated, for example light having a wavelength in the range from between 400 nm and 470 nm is preferably used for irradiation. Then brighter images can be displayed even in dim or dark illumination conditions.

According to the present application, blue light used for excitation preferably is light with a wavelength of 400 nm or more, i.e. including violet light, but no UV radiation, preferably it is light with a wavelength of 420 nm or more and, most preferably, of 430 nm or more.

According to the present invention all known LCD modes may be applied for the liquid crystal switching layer as the electro-optical elements, like for example the twisted nematic (TN) mode and the vertical alignment (VA) mode.

Preferred embodiments of the present application are also obvious for the expert from the claims filed with this application, which in this respect form a part of the disclosure of the instant application.
The melting point T(C,N), the transition from the smectic (S) to the nematic (N) phase T(S,N) and the clearing point T(N,I) of the liquid crystals are given in degrees centigrade.
In the present application, all temperatures are given in degrees centigrade (degrees Celsius, short °C), all physical data apply to a temperature of 20°C, and all concentrations are weight per cent (% resp. wt.-%), all unless explicitly stated otherwise.

### Examples

The present invention is illustrated in more detail by the following examples. They are intended to illustrate the present invention, without limiting it in any way.

However, the different embodiments, including their compositions, constitutions and physical properties, illustrate to the expert very well, which properties can be achieved by the present invention and also, in particular, in which ranges they can be modified. Especially, the combination of the various properties, which can be preferably achieved, is thus well defined for the expert.

### Example 1

Cholesteric liquid crystal layer, which corresponds to blue selective reflections as a light reflecting layer is prepared using the photo-polymerizable liquid crystal material RMM34C, a mixture of reactive mesogens comprising a photo-initiator, which is commercially available from Merck KGaA, Germany. Chiral dopant is BDH1281 (also available from Merck KGaA) for right-hand twist. The chiral dopant concentration is 4.54 wt% (B).

Glass substrate is cleaned and dried as usual and then a water solution of the polyvinylalcohol (PVA) from Kanto Chemical Co. Ltd., Japan is applied by spin-coating at 1,500 rpm. Then the substrate is pre-heated at a temperature of 80 °C for 3 min and cured at a temperature of 80 °C for 30 min. Then the substrate is subsequently rubbed in one direction. RMM34C doped with the chiral dopant BDH1281 is dissolved in propylene glycol monomethyl ether acetate (PGMEA) and 60 % solution is spin-coated at 2,000 rpm on the substrate covered with rubbed PVA. The substrate is then dried at a temperature of 100°C for 3 min.
The cholesteric liquid crystal structure formed by this process is then stabilized by polymerization initiated by exposure to (1,200 ± 50) mJ/cm² of irradiation by UV having a wavelength of 365 nm.

Siloxane layer for blue colour as a light converting layer is prepared using the photo polymerizable siloxane FX-V5500, which is commercially available from Adeka Co., Japan and the blue dye SEB-105 (commercially available from Merck KGaA, Germany). The blue dye is incorporated into FX-V5500 with 0.5 wt% concentration. FX-V5500 doped with the blue dye is dissolved in PGMEA and 67wt% solution is spin coated at 1,500 rpm on cleaned glass substrate and subsequently baked at 100 °C for 3 min. The Siloxane structure formed by this process is then stabilized by polymerization initiated by exposure to 360 mJ/cm² of irradiation by UV having a wavelength of 365 nm.

The VA LC cell as a light switching layer is obtained by using the empty LC cell with 10 µm thickness having patterned ITO electrode covered with polyimide commercial name JALS-2096-R1 purchased from JSR Corporation, which induces homeotropic alignment to MLC-6608 and MLC-6608.
MLC-6608 is introduced in the empty LC cell and encapsulated.
The LC cell is then sandwiched by an R-circular polarizer and an L-circular polarizer (from MeCan Imaging Inc., Japan) with the side of its quarter wave plate facing the LC cell. Physical properties of the MLC-6608 are shown in Table 1.

**Table 1: Physical properties of MLC-6608**

| | |
|---|---|
| nₑ | 1.5586 |
| nₒ | 1.4756 |
| Δn | 0.0083 |
| ε_{∥} | 3.6 |
| ε_{⊥} | 7.7 |
| Δε | -4.2 |

Here, an R-circular polarizer (from MeCan Imaging Inc., Japan), which transmits only right-hand circularly polarized light can be realized by placing a quarter wave plate having wide range of wavelengths to a linear polarizer so that its optical axis is twisted clockwise by 45° against the axis of transmission of polarizer. An L-circular polarizer (from MeCan Imaging Inc., Japan), which transmits only the circular polarized light having left handed sense of rotation, consists of a combination of a linear polarizer and a quarter wave plate, in which the slow axis of the quarter wave plate is rotated by 45° relative to the absorption axis of the polarizer.

The samples are assembled as follows. 400 nm LED light source, cholesteric LC layer, VA LC cell, and siloxane layer doped with blue dye, are placed in this sequence from the bottom to the top.

Emission spectra of the resulting light converting layer of the assembled samples are measured from the vertical direction using the luminance meter, CS-1000 (Konica Minolta Holdings, Inc., Japan) and the 400 nm LED light source. The excitation light comes from the 400 nm LED light source.
Reflection spectra of the resulting light reflecting layer of the samples are measured using a luminance meter CS-1000 and an incandescent lamp, Fiber Lite Model 190 from Dolan-Jenner Industries, Inc., as a light source for reflection spectra measurement.
The incident light is 20° tilted from the vertical direction to the substrate and the reflection is detected from the vertical direction.
The intensity of the excitation light from the 400 nm LED light source is 5 mW/cm² and the intensity of the incandescent lamp is 1,820 µW/cm².

The emission intensity against applied voltage to the LC cell is listed in Table 2.
As can clearly be seen the blue light emission intensity is controlled by the LC cell due to controlling the excitation light from the 400 nm LED light source by the LC cell.

**Table 2: Emission Intensity I in W/(sr · m² · nm) vs. Applied Voltage to the LC cell**

| U [V] | 0 | 1.0 | 2.0 | 2.2 | 2.4 | 2.6 | 2.8 | 3.0 |
|---|---|---|---|---|---|---|---|---|
| λ(nm) | I[10⁻⁶ W/(sr · m²·nm)] | | | | | | | |
| 430 | 73.7 | 72.9 | 73.1 | 75.0 | 300 | 2,960 | 6,760 | 10,200 |
| 440 | 58.0 | 57.3 | 56.7 | 56.7 | 210 | 2,040 | 4,700 | 7,320 |
| 450 | 36.5 | 35.8 | 35.8 | 34.9 | 120 | 1,100 | 2,500 | 4,060 |
| 460 | 22.5 | 22.7 | 22.3 | 21.1 | 58.2 | 457 | 1,040 | 1,810 |
| 470 | 18.4 | 18.4 | 18.3 | 18.1 | 49.9 | 383 | 868 | 1,410 |
| 480 | 14.3 | 14.1 | 14.0 | 14.3 | 38.3 | 301 | 680 | 1,020 |
| 490 | 10.8 | 10.7 | 10.6 | 11.1 | 28.7 | 228 | 535 | 751 |
| 500 | 9.3 | 9.24 | 9.01 | 9.51 | 25.8 | 209 | 507 | 713 |
| 510 | 11.5 | 11.4 | 11.3 | 11.8 | 38.3 | 365 | 904 | 1,450 |
| 520 | 12.7 | 12.5 | 12.4 | 12.7 | 45.9 | 472 | 1,170 | 1,970 |
| 530 | 12.5 | 12.2 | 12.3 | 12.9 | 47.5 | 507 | 1,260 | 2,140 |
| 540 | 12.1 | 11.8 | 11.9 | 12.5 | 46.3 | 507 | 1,270 | 2,200 |
| 550 | 11.7 | 11.5 | 11.5 | 12.0 | 45.0 | 500 | 1,270 | 2,230 |
| 560 | 11.3 | 11.0 | 11.1 | 11.5 | 43.0 | 481 | 1,240 | 2,210 |
| 570 | 10.3 | 10.0 | 10.0 | 10.5 | 38.5 | 432 | 1,140 | 2,070 |
| 580 | 9.42 | 9.33 | 9.37 | 9.72 | 34.4 | 395 | 1,060 | 1,940 |
| 590 | 8.63 | 8.38 | 8.40 | 8.83 | 30.2 | 356 | 964 | 1,780 |
| 600 | 7.89 | 7.81 | 7.88 | 8.35 | 28.4 | 339 | 911 | 1,660 |
| 610 | 7.37 | 6.97 | 7.38 | 7.36 | 25.8 | 305 | 813 | 1,500 |
| 620 | 6.43 | 6.49 | 6.28 | 6.95 | 23.2 | 269 | 722 | 1,360 |
| 630 | 5.73 | 5.72 | 5.83 | 6.09 | 19.5 | 228 | 626 | 1,190 |
| 640 | 5.19 | 5.23 | 5.22 | 5.61 | 17.5 | 206 | 565 | 1,080 |
| 650 | 4.55 | 4.64 | 4.64 | 4.90 | 15.5 | 180 | 489 | 936 |
| 660 | 4.08 | 4.24 | 4.36 | 4.29 | 13.3 | 153 | 424 | 833 |
| 670 | 3.61 | 3.64 | 3.81 | 3.92 | 11.4 | 133 | 368 | 714 |
| 680 | 3.29 | 3.08 | 3.33 | 3.44 | 9.8 | 109 | 302 | 597 |
| 690 | 2.81 | 2.98 | 3.10 | 2.93 | 8.1 | 91.3 | 256 | 511 |
| 700 | 2.67 | 2.49 | 2.64 | 2.56 | 7.0 | 75.5 | 211 | 417 |
| 710 | 2.73 | 2.48 | 2.57 | 2.60 | 6.1 | 61.6 | 171 | 348 |
| 720 | 3.04 | 3.22 | 3.27 | 2.84 | 5.8 | 51.5 | 143 | 287 |
| 730 | 4.15 | 4.49 | 4.69 | 4.07 | 6.5 | 43.3 | 115 | 237 |
| 740 | 7.10 | 6.76 | 6.99 | 6.57 | 8.2 | 38.4 | 98.2 | 196 |
| 750 | 12.0 | 11.9 | 12.0 | 10.8 | 12.5 | 35.6 | 82.5 | 166 |
| 760 | 19.5 | 19.7 | 19.6 | 17.8 | 19.0 | 38.9 | 75.8 | 146 |
| 770 | 29.1 | 29.6 | 29.7 | 26.9 | 27.8 | 44.6 | 70.4 | 129 |
| 780 | 41.2 | 41.3 | 41.1 | 37.8 | 38.8 | 49.5 | 75.8 | 117 |

The reflection intensity against applied voltage to the LC cell is listed in Table 3.
As can clearly be seen, the blue light reflection intensity is controlled by the LC cell due to controlling the incident light from the incandescent lamp by the LC cell.
Some remaining reflection when the applied voltage is 0 V is due to surface reflection of the sample and it is eliminated, if anti-reflection coating is used.

**Table 3: Reflection Intensity I in W/(sr·m²·nm) vs. Applied Voltage to the LC cell**

| U[V] | 0 | 1.0 | 2.0 | 2.2 | 2.4 | 2.6 | 2.8 | 3.0 |
|---|---|---|---|---|---|---|---|---|
| λ(nm) | I [10⁻⁶ W/(sr · m²·nm)] | | | | | | | |
| 430 | 723 | 711 | 703 | 516 | 510 | 565 | 626 | 858 |
| 440 | 1,050 | 1,030 | 1,020 | 779 | 773 | 896 | 1,050 | 1,400 |
| 450 | 1,130 | 1,120 | 1,110 | 834 | 834 | 1,080 | 1,420 | 2,030 |
| 460 | 1,160 | 1,140 | 1,130 | 825 | 831 | 1,240 | 1,870 | 2,920 |
| 470 | 1,140 | 1,120 | 1,110 | 782 | 796 | 1,340 | 2,200 | 3,700 |
| 480 | 1,090 | 1,070 | 1,060 | 718 | 738 | 1,390 | 2,500 | 4,450 |
| 490 | 1,010 | 993 | 986 | 646 | 671 | 1,360 | 2,680 | 4,890 |
| 500 | 996 | 984 | 977 | 602 | 634 | 1,340 | 2,750 | 5,490 |
| 510 | 1,030 | 1,020 | 1,010 | 600 | 634 | 1,250 | 2,420 | 4,850 |
| 520 | 1,070 | 1,060 | 1,050 | 610 | 642 | 1,010 | 1,570 | 3,190 |
| 530 | 1,110 | 1,100 | 1,090 | 624 | 659 | 929 | 1,260 | 2,460 |
| 540 | 1,170 | 1,160 | 1,150 | 648 | 685 | 918 | 1,160 | 2,280 |
| 550 | 1,250 | 1,240 | 1,230 | 677 | 718 | 935 | 1,140 | 2,270 |
| 560 | 1,330 | 1,320 | 1,310 | 710 | 754 | 957 | 1,140 | 2,290 |
| 570 | 1,410 | 1,390 | 1,380 | 743 | 788 | 981 | 1,140 | 2,350 |
| 580 | 1,480 | 1,470 | 1,460 | 776 | 821 | 1,010 | 1,160 | 2,400 |
| 590 | 1,560 | 1,540 | 1,530 | 807 | 853 | 1,040 | 1,190 | 2,490 |
| 600 | 1,630 | 1,620 | 1,610 | 838 | 884 | 1,060 | 1,210 | 2,560 |
| 610 | 1,700 | 1,690 | 1,680 | 862 | 910 | 1,080 | 1,220 | 2,640 |
| 620 | 1,780 | 1,770 | 1,760 | 893 | 941 | 1,110 | 1,240 | 2,710 |
| 630 | 1,860 | 1,850 | 1,840 | 925 | 972 | 1,140 | 1,280 | 2,800 |
| 640 | 1,950 | 1,930 | 1,920 | 960 | 1,010 | 1,170 | 1,310 | 2,910 |
| 650 | 2,030 | 2,010 | 2,000 | 994 | 1,040 | 1,200 | 1,340 | 3,020 |
| 660 | 2,080 | 2,060 | 2,050 | 1,020 | 1,070 | 1,220 | 1,360 | 3,080 |
| 670 | 2,090 | 2,080 | 2,070 | 1,030 | 1,080 | 1,230 | 1,370 | 3,080 |
| 680 | 2,060 | 2,050 | 2,040 | 1,020 | 1,070 | 1,220 | 1,360 | 3,030 |
| 690 | 1,950 | 1,940 | 1,930 | 979 | 1,020 | 1,160 | 1,290 | 2,860 |
| 700 | 1,730 | 1,730 | 1,730 | 889 | 926 | 1,040 | 1,160 | 2,550 |
| 710 | 1,440 | 1,450 | 1,450 | 760 | 793 | 892 | 992 | 2,150 |
| 720 | 1,130 | 1,150 | 1,160 | 605 | 633 | 711 | 792 | 1,700 |
| 730 | 905 | 920 | 929 | 473 | 496 | 555 | 619 | 1,350 |
| 740 | 769 | 781 | 788 | 383 | 401 | 448 | 498 | 1,120 |
| 750 | 699 | 707 | 711 | 340 | 354 | 391 | 428 | 972 |
| 760 | 642 | 646 | 649 | 309 | 321 | 351 | 379 | 855 |
| 770 | 593 | 595 | 596 | 286 | 296 | 321 | 342 | 769 |
| 780 | 573 | 572 | 571 | 273 | 281 | 308 | 330 | 746 |

As can clearly be seen, both emission and reflection intensity can be controlled by the liquid crystal layer of the LC cell in the same manner.

### Example 2

In a similar way as in the example 1, the cholesteric liquid crystal layer and the siloxane layer with fluorescent dye for green color are fabricated as follows.
The cholesteric liquid crystal layer is prepared using a photo-polymerizable liquid crystal material RMM34C, commercially available from Merck KGaA, Germany, doped with the commercially available chiral dopant BDH1281 (also from Merck KGaA). The concentration of the chiral dopant in RMM34C is 3, 78 wt%.
The Siloxane layer for green colour as a light converting layer is prepared using the photo polymerizable siloxane FX-V5500 and the green dyes Coumarin 6 commercially available from Sigma-Aldrich Corporation and Coumarin 500 (commercially available from Indeco corporation).
The green dyes, Coumarin 6 and Coumarin 500, are incorporated into the photo-polymerizable siloxane FX-V5500 with 0.5 wt% respectively.
The other conditions are the same as described in example 1.

The emission intensity against applied voltage to the LC cell is listed in Table 4.
As can clearly be seen the green light emission intensity is controlled by the LC cell due to controlling the excitation light from the 400 nm LED light source by the LC cell.

**Table 4: Emission Intensity I in W/(sr · m² · nm) vs. Applied Voltage to the LC cell**

| U[V] | 0 | 1.0 | 2.0 | 2.2 | 2.4 | 2.6 | 2.8 | 3.0 |
|---|---|---|---|---|---|---|---|---|
| λ(nm) | I[10⁻⁶ W/(sr · m²·nm)] | | | | | | | |
| 480 | 7.35 | 6.25 | 6.14 | 6.07 | 20.2 | 172 | 400 | 554 |
| 490 | 8.59 | 7.28 | 7.37 | 7.07 | 18.5 | 127 | 286 | 356 |
| 500 | 15.7 | 14.5 | 14.2 | 14.0 | 31.5 | 166 | 356 | 466 |
| 510 | 21.1 | 19.9 | 19.6 | 19.6 | 42.0 | 201 | 417 | 564 |
| 520 | 20.2 | 19.0 | 18.6 | 18.5 | 40.2 | 195 | 405 | 592 |
| 530 | 20.8 | 19.4 | 18.9 | 18.5 | 44.9 | 267 | 591 | 1,020 |
| 540 | 22.8 | 21.3 | 20.9 | 20.7 | 57.8 | 417 | 977 | 1,670 |
| 550 | 22.9 | 21.6 | 21.1 | 21.4 | 64.4 | 505 | 1,210 | 2,090 |
| 560 | 21.4 | 20.3 | 19.8 | 19.9 | 61.7 | 499 | 1,220 | 2,150 |
| 570 | 18.7 | 17.7 | 17.2 | 17.6 | 55.0 | 458 | 1,150 | 2,040 |
| 580 | 17.0 | 16.0 | 15.6 | 15.6 | 49.4 | 424 | 1,080 | 1,930 |
| 590 | 15.0 | 14.0 | 13.6 | 13.6 | 43.2 | 385 | 993 | 1,760 |
| 600 | 13.5 | 12.4 | 12.2 | 12.3 | 40.0 | 365 | 938 | 1,640 |
| 610 | 12.0 | 11.1 | 10.8 | 10.7 | 35.7 | 327 | 837 | 1,490 |
| 620 | 10.7 | 9.52 | 9.36 | 9.35 | 31.4 | 287 | 747 | 1,330 |
| 630 | 9.34 | 8.35 | 8.35 | 8.14 | 26.6 | 248 | 654 | 1,180 |
| 640 | 8.33 | 7.41 | 7.20 | 7.26 | 23.5 | 222 | 583 | 1,030 |
| 650 | 7.37 | 6.39 | 6.42 | 6.23 | 20.7 | 194 | 513 | 914 |
| 660 | 6.74 | 5.82 | 5.73 | 5.59 | 17.7 | 166 | 442 | 795 |
| 670 | 5.97 | 5.10 | 4.88 | 4.77 | 15.1 | 144 | 383 | 672 |
| 680 | 5.36 | 4.39 | 4.18 | 4.19 | 13.0 | 120 | 322 | 570 |
| 690 | 4.81 | 3.76 | 3.67 | 3.50 | 10.7 | 99.4 | 268 | 472 |
| 700 | 4.53 | 3.53 | 3.22 | 3.09 | 9.28 | 83.2 | 221 | 389 |
| 710 | 4.65 | 3.35 | 3.04 | 2.99 | 7.85 | 69.2 | 185 | 326 |
| 720 | 4.52 | 3.57 | 3.65 | 3.32 | 7.32 | 56.6 | 149 | 262 |
| 730 | 5.77 | 4.78 | 4.58 | 4.31 | 7.73 | 46.1 | 122 | 214 |
| 740 | 8.46 | 7.20 | 7.04 | 6.55 | 9.52 | 43.1 | 103 | 184 |
| 750 | 13.5 | 11.7 | 11.8 | 10.8 | 13.0 | 38.6 | 88.8 | 151 |
| 760 | 20.5 | 19.2 | 19.0 | 17.5 | 19.3 | 40.7 | 79.5 | 132 |
| 770 | 30.9 | 29.0 | 28.6 | 26.9 | 27.9 | 44.7 | 75.6 | 114 |
| 780 | 42.1 | 40.1 | 40.8 | 37.8 | 39.3 | 54.9 | 81.6 | 112 |

The reflection intensity against applied voltage to the LC cell is listed in Table 5.
As can clearly be seen, the green light reflection intensity is controlled by the LC cell due to controlling the incident light from the incandescent lamp by the LC cell.
Some remaining reflection when the applied voltage is 0 V is due to surface reflection of the sample and it's eliminated, if anti-reflection coating is used.

**Table 5: Reflection Intensity I in W/(sr · m² · nm) vs. Applied Voltage to the LC cell**

| U [V] | 0 | 1.0 | 2.0 | 2.2 | 2.4 | 2.6 | 2.8 | 3.0 |
|---|---|---|---|---|---|---|---|---|
| λ(nm) | I [10⁻⁶ W/(sr · m²·nm)] | | | | | | | |
| 480 | 317 | 310 | 309 | 284 | 290 | 442 | 666 | 1,020 |
| 490 | 899 | 880 | 871 | 869 | 876 | 1,090 | 1,440 | 2,030 |
| 500 | 2,380 | 2,320 | 2,290 | 2,360 | 2,370 | 2,770 | 3,520 | 4,820 |
| 510 | 3,600 | 3,500 | 3,450 | 3,630 | 3,640 | 4,320 | 5,640 | 7,970 |
| 520 | 3,520 | 3,430 | 3,380 | 3,550 | 3,570 | 4,450 | 6,150 | 9,120 |
| 530 | 3,120 | 3,040 | 3,000 | 3,100 | 3,140 | 3,990 | 5,620 | 8,710 |
| 540 | 2,890 | 2,820 | 2,780 | 2,830 | 2,870 | 3,490 | 4,570 | 6,450 |
| 550 | 2,680 | 2,610 | 2,580 | 2,600 | 2,640 | 3,030 | 3,560 | 4,390 |
| 560 | 2,430 | 2,380 | 2,350 | 2,340 | 2,390 | 2,700 | 3,060 | 3,510 |
| 570 | 2,210 | 2,160 | 2,140 | 2,090 | 2,140 | 2,430 | 2,690 | 3,080 |
| 580 | 2,050 | 2,000 | 1,980 | 1,900 | 1,960 | 2,220 | 2,450 | 2,800 |
| 590 | 1,910 | 1,870 | 1,850 | 1,740 | 1,800 | 2,060 | 2,250 | 2,620 |
| 600 | 1,780 | 1,750 | 1,730 | 1,590 | 1,660 | 1,900 | 2,070 | 2,460 |
| 610 | 1,690 | 1,660 | 1,650 | 1,470 | 1,540 | 1,780 | 1,940 | 2,360 |
| 620 | 1,630 | 1,600 | 1,590 | 1,400 | 1,470 | 1,700 | 1,860 | 2,290 |
| 630 | 1,600 | 1,580 | 1,570 | 1,350 | 1,420 | 1,650 | 1,810 | 2,270 |
| 640 | 1,600 | 1,580 | 1,570 | 1,340 | 1,410 | 1,630 | 1,780 | 2,270 |
| 650 | 1,610 | 1,580 | 1,570 | 1,330 | 1,400 | 1,620 | 1,760 | 2,280 |
| 660 | 1,610 | 1,580 | 1,580 | 1,330 | 1,400 | 1,620 | 1,760 | 2,290 |
| 670 | 1,590 | 1,570 | 1,560 | 1,310 | 1,380 | 1,590 | 1,740 | 2,270 |
| 680 | 1,550 | 1,530 | 1,520 | 1,280 | 1,350 | 1,550 | 1,700 | 2,200 |
| 690 | 1,450 | 1,430 | 1,430 | 1,210 | 1,270 | 1,460 | 1,590 | 2,060 |
| 700 | 1,280 | 1,270 | 1,270 | 1,090 | 1,150 | 1,310 | 1,430 | 1,830 |
| 710 | 1,070 | 1,060 | 1,060 | 922 | 972 | 1,110 | 1,210 | 1,520 |
| 720 | 833 | 831 | 835 | 723 | 765 | 872 | 956 | 1,190 |
| 730 | 659 | 661 | 665 | 559 | 592 | 673 | 736 | 943 |
| 740 | 556 | 557 | 561 | 457 | 483 | 547 | 595 | 786 |
| 750 | 499 | 498 | 501 | 406 | 427 | 475 | 510 | 681 |
| 760 | 452 | 453 | 454 | 371 | 389 | 427 | 452 | 597 |
| 770 | 415 | 412 | 413 | 344 | 357 | 390 | 407 | 525 |
| 780 | 397 | 395 | 393 | 329 | 341 | 374 | 394 | 498 |

As can clearly be seen, both emission and reflection intensity can be controlled by the liquid crystal layer of the LC cell in the same manner.

### Example 3

Similar to the investigations described in example 1 and 2, the cholesteric liquid crystal layer and the siloxane layer with fluorescent dye for red color are fabricated as follows.
The cholesteric liquid crystal layer is prepared using a photo-polymerizable liquid crystal material RMM34C, commercially available from Merck KGaA, Germany, doped with the commercially available chiral dopant BDH1281 (also from Merck KGaA). The concentration of the chiral dopant in RMM34C is 3, 00 wt%.
The Siloxane layer, for red colour as a light converting layer, is prepared using the photo polymerizable siloxane FX-V5500 and the red dyes NK-3590 commercially available from Hayashibara Biochemical Laboratories and Coumarin 515 (commercially available from Indeco corporation). The red dyes, NK-3590 and Coumarin 515, are incorporated into the photo-polymerizable siloxane FX-V5500 with 0.19 wt% and 0.22 wt% respectively.
The other conditions are the same as described in example 1.

The emission intensity against applied voltage to the LC cell is listed in Table 6.
As can clearly be seen, the red light emission intensity is controlled by the LC cell due to controlling the excitation light from the 400 nm LED light source by the LC cell.

**Table 6: Emission Intensity I in W/(sr · m² · nm) vs. Applied Voltage to the LC cell**

| U [V] | 0 | 1.0 | 2.0 | 2.2 | 2.4 | 2.6 | 2.8 | 3.0 |
|---|---|---|---|---|---|---|---|---|
| λ(nm) | I [10⁻⁶ W/(sr · m²·nm)] | | | | | | | |
| 630 | 1.87 | 1.68 | 1.63 | 1.61 | 2.65 | 34.6 | 99.2 | 84.9 |
| 640 | 1.85 | 1.88 | 1.72 | 1.38 | 2.47 | 32.2 | 90.7 | 81.3 |
| 650 | 2.02 | 1.98 | 1.87 | 1.50 | 2.57 | 33.6 | 97.7 | 89.8 |
| 660 | 2.53 | 2.55 | 2.56 | 2.40 | 4.34 | 63.8 | 187 | 168 |
| 670 | 2.79 | 2.61 | 2.62 | 2.98 | 4.69 | 76.2 | 226 | 216 |
| 680 | 2.46 | 2.55 | 2.41 | 2.83 | 4.27 | 69.7 | 207 | 198 |
| 690 | 2.50 | 2.33 | 2.35 | 2.83 | 4.35 | 66.7 | 199 | 192 |
| 700 | 2.21 | 1.86 | 2.15 | 2.52 | 3.45 | 53.9 | 162 | 159 |
| 710 | 1.95 | 2.05 | 1.72 | 2.44 | 3.26 | 46.0 | 137 | 136 |
| 720 | 2.03 | 1.84 | 2.02 | 2.99 | 3.56 | 38.9 | 116 | 115 |
| 730 | 2.33 | 2.51 | 2.13 | 3.85 | 4.57 | 33.6 | 94.9 | 92.3 |
| 740 | 3.10 | 2.99 | 3.05 | 6.19 | 6.69 | 30.7 | 79.7 | 78.2 |
| 750 | 4.82 | 4.71 | 4.80 | 10.6 | 11.0 | 30.5 | 69.6 | 65.2 |
| 760 | 7.84 | 7.23 | 7.32 | 17.5 | 17.8 | 32.2 | 61.4 | 57.1 |
| 770 | 11.3 | 11.0 | 11.1 | 26.0 | 26.7 | 38.8 | 64.6 | 48.9 |
| 780 | 15.9 | 15.5 | 15.3 | 36.1 | 36.7 | 45.4 | 64.9 | 46.0 |

The reflection intensity against applied voltage to the LC cell is listed in Table 7.
As can clearly be seen, the red light reflection intensity is controlled by the LC cell due to controlling the incident light from the incandescent lamp by the LC cell.
Some remaining reflection when the applied voltage is 0 V is due to surface reflection of the sample and it's eliminated, if anti-reflection coating is used.

**Table 7: Reflection Intensity I in W/(sr · m² · nm) vs. Applied Voltage to the LC cell**

| U [V] | 0 | 1.0 | 2.0 | 2.2 | 2.4 | 2.6 | 2.8 | 3.0 |
|---|---|---|---|---|---|---|---|---|
| λ(nm) | I [10⁻⁶ W/(sr · m²·nm)] | | | | | | | |
| 630 | 1,330 | 1,300 | 1,280 | 888 | 913 | 1,640 | 3,910 | 10,100 |
| 640 | 1,350 | 1,320 | 1,310 | 918 | 941 | 1,680 | 4,040 | 10,200 |
| 650 | 1,360 | 1,340 | 1,330 | 948 | 969 | 1,680 | 3,990 | 10,200 |
| 660 | 1,360 | 1,340 | 1,330 | 967 | 986 | 1,490 | 2,990 | 7,930 |
| 670 | 1,350 | 1,330 | 1,320 | 976 | 992 | 1,340 | 2,250 | 4,920 |
| 680 | 1,310 | 1,290 | 1,280 | 970 | 985 | 1,240 | 1,870 | 3,700 |
| 690 | 1,220 | 1,210 | 1,200 | 927 | 940 | 1,140 | 1,550 | 2,910 |
| 700 | 1,080 | 1,070 | 1,070 | 842 | 854 | 1,000 | 1,290 | 2,250 |
| 710 | 905 | 898 | 897 | 718 | 730 | 846 | 1,050 | 1,710 |
| 720 | 719 | 715 | 716 | 572 | 585 | 671 | 815 | 1,290 |
| 730 | 576 | 574 | 575 | 448 | 459 | 523 | 631 | 1,000 |
| 740 | 486 | 483 | 484 | 367 | 376 | 427 | 512 | 825 |
| 750 | 437 | 434 | 434 | 328 | 335 | 378 | 449 | 716 |
| 760 | 398 | 395 | 395 | 304 | 309 | 347 | 406 | 641 |
| 770 | 367 | 364 | 364 | 285 | 288 | 321 | 370 | 584 |
| 780 | 359 | 356 | 356 | 283 | 285 | 314 | 357 | 562 |

As can clearly be seen, both emission and reflection intensity can be controlled by the liquid crystal layer of the LC cell in the same manner.

These data clearly shows that the effect of the incorporation of a dye(s) into the siloxane layer and cholesteric LC layer without light emitting moieties are significantly improving the intensity of light emission and the intensity of light reflection furthermore, efficient light emitting moieties can be used in the siloxane layer because of the uniformity problem of light emitting moieties in liquid crystal materials is solved.
It is quite good to be able to choose the best emitting moieties from among many options.

### Explanation of Symbols for the Figures

### I. General Remarks

### 1. Path of Light

Broad arrows in the figures indicate the path of light.

### 2. Colour of Light

- R: red,
- B: blue and
- G: green.

### II. Reference Numbers

### 1. Figures 1 to 4

- 1: light reflecting layer
- 2: light switching layer
- 3: light converting layer
- 4: light emitting substance
- 5: backlight
- 6: exciting light
- 7: ambient light
- 8: reflected light
- 9: emitted light
- 10: exciting light preventing layer
- 11: light direction changing layer
- 12: light direction changing layer
- 13: parallel light
- 14: going out or coming into light

## Claims

1. An electro-optical display comprising pixels each including one electro-optical switching element (2) the electro-optical display further comprising:
- a blue luminescent LED light source as means for illumination (5) of the electro-optical switching elements (2),
- a light reflecting layer (1), adapted to wavelength selectively reflect light and being arranged between the electro-optical switching elements (2) and the means for illumination (5),
- wherein the electro-optical switching element (2) of each pixel is adapted to control the intensity of light of the respective pixel,
and
- a light converting layer (3), adapted to shift the wavelength of blue light to longer values and arranged over the electro - optical element (2),
wherein the light reflecting layer (1), the electro-optical switching elements (2) and the light converting layer (3) are arranged in this sequence,
wherein, the light reflecting layer (1) is patterned congruent with the pixels, and wherein the electro-optical display further comprises a light direction changing layer (11) located between the light reflecting layer (1) and the illumination means (5),
wherein the light converting layer (3) is patterned congruent with the pixels, and
the light direction changing layer (11) consists of a micro lens array.

2. An electro-optical display according to claim 1,
wherein the light reflecting layer (1) comprises three different elements, and each element has a different cholesteric liquid crystal exhibiting a different wavelength of selective reflection.

3. An electro-optical display according to claim 1 or 2,
wherein the light reflecting layer (1) comprises a set of three elements, and each element has a different cholesteric liquid crystal exhibiting a different wavelength of selective reflection.

4. An electro-optical display according to one of claims of 1 to 3, wherein the light reflecting layer (1) is arranged to wavelength-selectively reflect the three primary colours red (R), green (G) and blue (B).

5. An electro-optical display according to one of claims of 2, 3, and 4 if claim 4 depends on claim 2 or 3, wherein each cholesteric liquid crystal layer morphology of the light reflecting layer (1) is disturbed by tilting the helical axes.

6. An electro-optical display according to one of claims 1 to 5, wherein the light converting layer (3) comprises light luminescent substances (4), which are selected from the groups of fluorescent materials, phosphorescent materials and phosphors.

7. An electro-optical display according to one of claims 1 to 6, further comprising one or more anti-reflection layers.

8. An electro-optical display according to one of claims 1 to 7, comprising another light direction changing layer (12) located on the opposite side of the light converting layer opposite to the electro-optical switching elements (2).

9. An electro-optical display according to one of claims 1 to 8, **characterized in that** it comprises an active matrix array capable of addressing the display.

10. Use of an electro-optical display according to one of claims 1 to 9, for the display of information.

## Patentansprüche

1. Elektrooptische Anzeige enthaltend Pixel, die jeweils ein elektrooptisches Schaltelement (2) beinhalten, wobei die elektrooptische Anzeige ferner enthält:
- eine blau leuchtende LED-Lichtquelle als Mittel zur Beleuchtung (5) der elektrooptischen Schaltelemente (2);
- eine Lichtreflexionsschicht (1), die dazu angepasst ist, Licht wellenlängenselektiv zu reflektieren, und zwischen den elektrooptischen Schaltelementen (2) und dem Mittel zur Beleuchtung (5) angeordnet ist,
- wobei das elektrooptische Schaltelement (2) jedes Pixels dazu angepasst ist, die Lichtintensität des jeweiligen Pixels zu steuern, und
- eine Lichtumwandlungsschicht (3), die dazu angepasst ist, die Wellenlänge von blauem Licht zu längeren Werten zu verschieben, und über dem elektrooptischen Element (2) angeordnet ist,
wobei die Lichtreflexionsschicht (1), die elektrooptischen Schaltelemente (2) und die Lichtumwandlungsschicht (3) in dieser Reihenfolge angeordnet sind, wobei die Lichtreflexionsschicht (1) kongruent mit den Pixeln strukturiert ist und wobei die elektrooptische Anzeige ferner eine Lichtrichtungsänderungsschicht (11) enthält, die zwischen der Lichtreflexionsschicht (1) und dem Beleuchtungsmittel (5) angeordnet ist,
wobei die Lichtumwandlungsschicht (3) kongruent mit den Pixeln strukturiert ist und
die Lichtrichtungsänderungsschicht (11) aus einer Mikrolinsenanordnung besteht.

2. Elektrooptische Anzeige nach Anspruch 1,
wobei die Lichtreflexionsschicht (1) drei verschiedene Elemente enthält und jedes Element einen unterschiedlichen cholesterischen Flüssigkristall aufweist, der eine unterschiedliche Wellenlänge der selektiven Reflexion zeigt.

3. Elektrooptische Anzeige nach Anspruch 1 oder 2,
wobei die Lichtreflexionsschicht (1) einen Satz von drei Elementen enthält und jedes Element einen unterschiedlichen cholesterischen Flüssigkristall aufweist, der eine unterschiedliche Wellenlänge der selektiven Reflexion zeigt.

4. Elektrooptische Anzeige nach einem der Ansprüche 1 bis 3, wobei die Lichtreflexionsschicht (1) dazu angeordnet ist, die drei Primärfarben Rot (R), Grün (G) und Blau (B) wellenlängenselektiv zu reflektieren.

5. Elektrooptische Anzeige nach einem der Ansprüche 2, 3, und 4, wenn Anspruch 4 von Anspruch 2 oder 3 abhängt, wobei jede Schichtmorphologie des cholesterischen Flüssigkristalls der Lichtreflexionsschicht (1) durch Neigen der helikalen Achsen gestört ist.

6. Elektrooptische Anzeige nach einem der Ansprüche 1 bis 5, wobei die Lichtumwandlungsschicht (3) lichtlumineszierende Substanzen (4) enthält, die aus den Gruppen der Fluoreszenzmaterialien, Phosphoreszenzmaterialien und Leuchtstoffe ausgewählt sind.

7. Elektrooptische Anzeige nach einem der Ansprüche 1 bis 6, ferner enthaltend eine oder mehrere Antireflexionsschichten.

8. Elektrooptische Anzeige nach einem der Ansprüche 1 bis 7, enthaltend eine weitere Lichtrichtungsänderungsschicht (12), die auf der entgegengesetzten Seite der Lichtumwandlungsschicht entgegengesetzt zu den elektrooptischen Schaltelementen (2) angeordnet ist.

9. Elektrooptische Anzeige nach einem der Ansprüche 1 bis 8, **dadurch gekennzeichnet, dass** sie eine Aktivmatrixanordnung enthält, die in der Lage ist, die Anzeige anzusprechen.

10. Verwendung einer elektrooptischen Anzeige nach einem der Ansprüche 1 bis 9 zum Anzeigen von Information.

## Revendications

1. Affichage électro-optique comprenant des pixels dont chacun inclut un élément de commutation électro-optique (2), l'affichage électro-optique comprenant en outre :
- une source de lumière LED luminescente bleue en tant que moyen d'éclairage (5) pour éclairer les éléments de commutation électro-optique (2) ;
- une couche de réflexion de lumière (1), qui est adaptée de manière à ce qu'elle réfléchisse la lumière de façon sélective en termes de longueur d'onde et qui est agencée entre les éléments de commutation électro-optique (2) et le moyen d'éclairage (5) ;
- dans lequel l'élément de commutation électro-optique (2) de chaque pixel est adapté de manière à ce qu'il commande l'intensité de la lumière du pixel respectif ; et
- une couche de conversion de lumière (3), qui est adaptée de manière à ce qu'elle décale la longueur d'onde de la lumière bleue selon des valeurs plus longues et qui est agencée au-dessus de l'élément de commutation électro-optique (2),
dans lequel la couche de réflexion de lumière (1), les éléments de commutation électro-optique (2) et la couche de conversion de lumière (3) sont agencés selon cette séquence,
dans lequel la couche de réflexion de lumière (1) est conformée en termes de motif(s) de telle sorte qu'elle soit cohérente avec les pixels, et dans lequel l'affichage électro-optique comprend en outre une couche de modification de direction de la lumière (11) qui est localisée entre la couche de réflexion de lumière (1) et le moyen d'éclairage (5)
dans lequel la couche de conversion de lumière (3) est conformée en termes de motif(s) de telle sorte qu'elle soit cohérente avec les pixels ; et la couche de modification de direction de la lumière (11) est constituée par un réseau de microlentilles.

2. Affichage électro-optique selon la revendication 1, dans lequel la couche de réflexion de lumière (1) comprend trois éléments différents, et chaque élément comporte un cristal liquide cholestérique différent qui présente une longueur d'onde de réflexion sélective différente.

3. Affichage électro-optique selon la revendication 1 ou 2, dans lequel la couche de réflexion de lumière (1) comprend un jeu de trois éléments, et chaque élément comporte un cristal liquide cholestérique différent qui présente une longueur d'onde de réflexion sélective différente.

4. Affichage électro-optique selon l'une quelconque des revendications 1 à 3, dans lequel la couche de réflexion de lumière (1) est agencée de manière à ce qu'elle réfléchisse de façon sélective en termes de longueur d'onde les trois couleurs primaires que sont le rouge (R), le vert (G) et le bleu (B).

5. Affichage électro-optique selon l'une quelconque des revendications 2, 3 et 4 si la revendication 4 dépend de la revendication 2 ou 3, dans lequel chaque morphologie de couche de cristal liquide cholestérique de la couche de réflexion de lumière (1) est perturbée en inclinant les axes hélicoïdaux.

6. Affichage électro-optique selon l'une des revendications 1 à 5, dans lequel la couche de conversion de lumière (3) comprend des substances luminescentes diffuseuses de lumière (4), lesquelles substances sont sélectionnées parmi les groupes constitués par les matériaux fluorescents, les matériaux phosphorescents et les phosphores.

7. Affichage électro-optique selon l'une des revendications 1 à 6, comprenant en outre une ou plusieurs couche(s) antireflet.

8. Affichage électro-optique selon l'une des revendications 1 à 7, comprenant une autre couche de modification de direction de la lumière (12) qui est localisée sur le côté opposé de la couche de conversion de lumière à l'opposé des éléments de commutation électro-optique (2).

9. Affichage électro-optique selon l'une des revendications 1 à 8, **caractérisé en ce qu'**il comprend un réseau à matrice(s) active(s) qui permet d'adresser l'affichage.

10. Utilisation d'un affichage électro-optique selon l'une des revendications 1 à 9, pour l'affichage d'informations.
